# EUROPEAN PATENT APPLICATION

(11) **EP 4 708 776 A1**
(43) Date of publication of application: **11.03.2026**
(21) Application number: 25199365.5
(22) Date of filing: 01.09.2025
(51) Int. Cl.: H04L 12/10

(54) **POWERED DEVICE AND METHOD FOR CONTROLLING POWER MODE OF THEREOF**

(30) Priority: 04.09.2024 KR 20240120336
(71) Applicant: Hanwha Vision Co., Ltd., Seongnam-si, Gyeonggi-do 13488 (KR)
(72) Inventor: Lee, Chaewon, 13488 Seongnam-si, Gyeonggi-do (KR); Kim, Hyunsub, 13488 Seongnam-si, Gyeonggi-do (KR); Ko, Dowon, 13488 Seongnam-si, Gyeonggi-do (KR); Kim, Jinsoo, 13488 Seongnam-si, Gyeonggi-do (KR); Lee, Jongkyung, 13488 Seongnam-si, Gyeonggi-do (KR); Seo, Hyojong, 13488 Seongnam-si, Gyeonggi-do (KR); Lee, Yongjun, 13488 Seongnam-si, Gyeonggi-do (KR); Kang, Namkyoung, 13488 Seongnam-si, Gyeonggi-do (KR)
(74) Representative: Gulde & Partner

(57) **Abstract**

A powered device (100) configured for Power-over-Ethernet (PoE) includes a port (170) configured to be connected to an Ethernet cable (180) through which the PoE is supplied; and a processor (160) configured to control a power mode including a first power mode and a second power mode such that the powered device (100) operates in one of the first power mode having a first power range supplied via the PoE, and the second power mode having a second power range supplied via the PoE and greater than the first power range, wherein the processor (160) is further configured to switch the power mode to the first power mode and reboot the powered device based on the powered device being booted in the second power mode and being rebooted in response to a test power being supplied during a selected period of time.

## Description

### BACKGROUND

### 1. Field

This disclosure relates to a powered device and a method for controlling a power mode of a powered device.

### 2. Description of Related Art

Power over Ethernet (PoE) is known as a method for supplying power to various powered devices, including residential and commercial infrastructure, audio devices (e.g., speakers and receivers), video devices (e.g., video decoders), automation devices (e.g., cameras, door locks, lighting devices, and motor-operated devices), and other electrical devices.

By utilizing PoE technology, power sourcing equipment (PSE), such as a PoE switch, may transmit both power and data to powered devices via an Ethernet cable. Supplying both power and data through a single Ethernet cable simplifies wiring, reduces installation costs, and is therefore well-suited for application in surveillance camera devices, such as a closed-circuit television (CCTV) systems. Various technologies are being developed to efficiently manage power consumption in surveillance camera devices, particularly those equipped with pan-tilt-zoom (PTZ) functionality operated by a motor or those that consume substantial power in operations such as securing a visibility range and performing object recognition.

### SUMMARY

In the case of surveillance cameras, due to multi-channel usage and high-performance requirements, power consumption is increasing, and there is a growing need for IEEE 802.3bt (commonly referred to as PoE++), which provides higher power delivery beyond that of IEEE 802.3at (PoE+). However, in field environments where the power supply system is already configured based on PoE+, users may still desire to use high-performance products in PoE+ mode. Accordingly, in actual deployments, the power mode of surveillance cameras is often applied in two selectable modes: PoE+ and PoE++. Although the surveillance camera allows selection between PoE+ and PoE++ modes, in a case where a user selects the PoE++ mode while the connected PSE switch only supports PoE+ power, a problem of endless rebooting due to insufficient power may occur.

Conventionally, this issue is resolved by accessing the web page of the surveillance camera and manually switching the power mode to PoE+. However, in an endless reboot state, access to the web page is impossible, effectively preventing any setting change. The only solution is to temporarily connect the surveillance camera to an expensive PoE++ switch to complete booting, access the web page to switch the mode to PoE+, and then reconnect the surveillance camera to the original PoE+ switch at the installation site. This approach cannot be executed immediately on-site, and has the drawbacks of requiring physical disconnection and reinstallation of the surveillance camera, resulting in time delay and inconvenience.

To address the above-described issues, the power mode control method of a powered device according to an embodiment of this disclosure provides a method of controlling the power mode such that the powered device operates in a mode that does not exceed the maximum allowable power of the connected PSE switch by identifying the maximum supply power of the PSE.

The technical problems intended to be solved by this disclosure are not limited to those described above, and other technical challenges not explicitly mentioned will be apparent to those skilled in the art from the detailed description of the embodiments that follow.

The invention is set out in the appended set of claims. In an embodiment, a powered device configured for Power-over-Ethernet (PoE) includes; a port configured to be connected to an Ethernet cable through which the PoE is supplied; and a processor configured to control a power mode including a first power mode and a second power mode such that the powered device operates in one of the first power mode having a first power range supplied via the PoE, and a second power mode having a second power range supplied via the PoE and (which is) greater than the first power range, wherein the processor is further configured to switch the power mode to the first power mode and reboot the powered device based on the powered device being booted in the second power mode and being rebooted in response to a test power being supplied during a selected period of time. In other words, the processor is further configured to, when the powered device is in the second power mode, i.e., booted in the second power mode, and is being rebooted in response to a test power being supplied during a selected or predetermined period of time, switch the power mode (from the second power mode) to the first power mode and reboot the powered device. The processor may be configured to supply the test power during the selected period of time to determine whether the PoE can supply sufficient power required by the powered device. In a case where the PoE cannot supply sufficient power, a problem of endless rebooting of the powered device due to insufficient power may occur. Due to the switch of the power mode to the first power mode and the reboot of the powered device, the problem of endless rebooting of the powered device is solved.

The processor may be configured to communicate with a power sourcing equipment (PSE) through the port and the Ethernet cable, and to switch the power mode to the first power mode and reboot the powered device, based on a power range supplied via the PoE in accordance with a PoE standard and being insufficient to support the second power range. Advantageously, the occurrence of endless rebooting of the powered device is further reduced.

The processor may be configured to maintain the second power mode based on a power supplied from the PSE and being (which is) greater than the test power.

The power mode may be a PoE mode, the first power mode may be a first PoE mode corresponding to IEEE 802.3at, and the second power mode may be a second PoE mode corresponding to IEEE 802.3bt.

The processor may be configured to switch the power mode to the first power mode and reboot the powered device based on a power specification of a power sourcing equipment (PSE) provided through the port and the Ethernet cable being below the second power range.

The powered device may include a surveillance camera.

The test power may be supplied in a stage in which the surveillance camera may perform a power-on operation, a fan-on operation, and a camera-on operation after booting of the surveillance camera. The processor may be configured to supply the test power in a stage in which the surveillance camera performs a power-on operation, a fan-on operation, and a camera-on operation after booting of the surveillance camera.

The processor may be configured to generate an alarm to be displayed on a display of an external device configured to manage the powered device, and/or to store a system log, based on the power mode being switched to the first power mode and the powered device being rebooted.

In another embodiment, a powered device configured for Power-over-Ethernet (PoE) may include: a port configured to be connected to an Ethernet cable through which the PoE is supplied; and a processor configured to control a power mode including a first power mode and a second power mode such that the powered device operates in one of the first power mode having a first power range supplied via the PoE, and the second power mode having a second power range supplied via the PoE and greater than the first power range, wherein the processor may be configured to control the power mode such that a power specification of a power sourcing equipment (PSE) may be greater than a power range required by the selected power mode.

The processor may be configured to transmit a signal requesting the power specification of the PSE, and receive information related to the power specification from the PSE and control the power mode such that a power specification of the PSE is greater than a power range required by the selected power mode.

The test power being supplied during the selected period of time maybe greater than the first power mode and lower than the second power mode. The processor may be configured to apply the test power during the selected period of time being greater than the first power mode and lower than the second power mode.

The processor may be configured to determine that the powered device does not reboot in response to the supplied test power phase and to maintain the second power mode in this case.

In another embodiment, a method for controlling a power mode of a powered device configured for Power-over-Ethernet (PoE), includes: booting the powered device in a selected power mode among at least two power modes having different power ranges; applying a test power during a selected period of time after the booting of the powered device; detecting whether the powered device reboots in response to the supplied test power; and switching the power mode, e.g., the PoE mode to a PoE mode, to have a smaller power range than the selected power mode, e.g., the PoE mode, based on the powered device being determined to reboot.

The power mode may include a first power mode based on IEEE 802.3at and a second power mode based on IEEE 802.3bt, according to a power specification provided to an Ethernet cable port of the powered device.

The selected power mode may be selected through user input before the test power is applied.

The method may further include; after the powered device starts normal operation in the first power mode, changing the power mode to the second power mode through user input; applying a test power; and maintaining the second power mode without rebooting the powered device based on the powered device responding normally to the applied test power.

According to an embodiment of this disclosure, by identifying the maximum supply power of a PSE switch connected to the surveillance camera, the power mode of the surveillance camera may be maintained in a mode that does not exceed the maximum allowable power of the PSE switch, thereby enabling stable operation.

The effects to be achieved by the disclosure are not limited to the effects described above, and other effects not mentioned may be readily understood by those skilled in the art from the following description.

### BRIEF DESCRIPTION OF DRAWINGS

The accompanying drawings, which are included as part of the detailed description to help the understanding of the disclosure, provide embodiments of the disclosure, and explain the technical features of the disclosure together with the detailed description.
FIG. 1 is a schematic diagram illustrating a surveillance camera system according to an embodiment of the disclosure.
FIG. 2 is a schematic block diagram of a powered device according to an embodiment of the disclosure.
FIG. 3 is a schematic diagram illustrating a PoE power mode of the powered device according to an embodiment of the disclosure.
FIG. 4 is a flowchart illustrating a power mode control method of the powered device according to an embodiment of the disclosure.
FIG. 5 is a schematic diagram illustrating an example in which a change of the power mode of the powered device is required according to an embodiment of the disclosure.
FIG. 6 is a flowchart illustrating a power mode control method of the powered device according to another embodiment of the disclosure.
FIG. 7 is a flowchart illustrating a power mode control method of the powered device according to another embodiment of the disclosure.

### DETAILED DESCRIPTION

Hereinafter, embodiments of the disclosure will be described in detail with reference to the attached drawings. The same or similar components are given the same reference numbers and redundant description thereof is omitted. The suffixes "module" and "unit" of elements herein are used for convenience of description and thus are used interchangeably and do not have any distinguishable meanings or functions. Further, in the following description, in a case where a detailed description of known techniques associated with the disclosure would unnecessarily obscure the gist of the disclosure, detailed description thereof will be omitted. The attached drawings are provided for easy understanding of embodiments of the disclosure and do not limit the disclosure, and the embodiments should be construed as including all modifications, and alternatives falling within the scope of the embodiments as defined by the appended set of claims.

While terms, such as "first", "second", etc., may be used to describe various components, such components must not be limited by the above terms. The above terms are used only to distinguish one component from another.

When an element is "coupled" or "connected" to another element, it should be understood that at least a third element may be present between the two elements or the element may be directly coupled or connected to the other element. When an element is "directly coupled" or "directly connected" to another element, it should be understood that no element is present between the two elements.

The singular forms are intended to include the plural forms as well, unless the context clearly indicates otherwise.

In the specification, it will be further understood that the terms "comprise" and "include" specify the presence of stated features, integers, steps, operations, elements, components, and/or combinations thereof, but do not preclude the presence or addition of one or more other features, integers, steps, operations, elements, components, and/or combinations thereof.

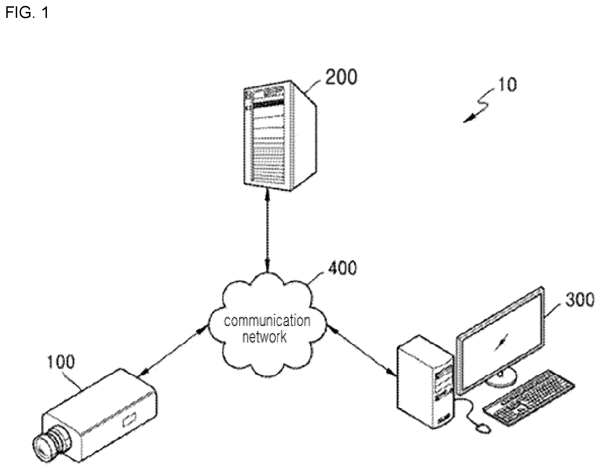

FIG. 1 is a schematic diagram illustrating a surveillance camera system for implementing a method for controlling a surveillance camera according to an embodiment of the disclosure.

Referring to FIG. 1, a surveillance camera system 10 according to an embodiment of the disclosure may include an image capture device 100 and an image management server 200. The image capture device 100 may be an electronic imaging device disposed at a fixed location in a specific place, may be an electronic imaging device that is moved automatically or manually along a selected path, or may be an electronic imaging device that is moved by a person or a robot. The image capture device 100 may be an IP (internet protocol) camera connected to the wired/wireless Internet. The image capture device 100 may be a pan-tilt-zoom (PTZ) camera having pan, tilt, and zoom functions. The image capture device 100 may have a function of recording a monitored area or capturing still images. The image capture device 100 may have a function of recording audio generated in a monitored area. In other words, the image capture device 100 may be configured to record audio generated in a monitored area. In a case where a change, such as movement or audio, occurs in the monitored area, the image capture device 100 may have a function of generating a notification and/or recording and/or capturing images accordingly. In other words, the image capture device 100 may be configured to generate a notification and/or record and/or capture images in a case where a change, such as movement or audio, occurs in the monitored area.

The image management server 200 may be a device that receives and stores an image as captured by the image capture device 100 and/or an image obtained by processing or editing the captured image. The image management server 200 may analyze the received image to achieve a specific purpose. For example, the image management server 200 may detect an object in the image using an object detection process. An Al-based algorithm may be applied to the object detection algorithm, and an object may be detected by applying a pre-trained artificial neural network model.

For example, the image management server 200 may store various learning models suitable for video analysis purposes. In addition to the aforementioned learning model for object detection, the image management server 200 may further store a model capable of acquiring and detecting the movement speed of detected objects.

For example, the image management server 200 may analyze the received image to generate metadata and index information corresponding to the metadata. The image management server 200 may analyze image information and/or audio information included in the received image together or separately to generate metadata and index information for the metadata.

The surveillance camera system 10 may further include an external device 300 capable of performing wired/wireless communication with the image capture device 100 and/or the image management server 200.

The external device 300 may transmit an information provision request signal to the image management server 200 to obtain for requesting to provide all or part of an image. The external device 300 may transmit an information provision request signal to the image management server 200 to request whether or not an object exists as a result of image analysis. For example, the external device 300 may transmit, to the image management server 200, metadata obtained by analyzing an image and/or an information provision request signal for requesting index information corresponding to the metadata.

The surveillance camera system 10 may further include a communication network 400 that provides a wired/wireless communication path between the image capture device 100, the image management server 200, and/or the external device 300. The communication network 400 may include, for example, a wired network such as LANs (Local Area Networks), WANs (Wide Area Networks), MANs (Metropolitan Area Networks), ISDNs (Integrated Service Digital Networks), and a wireless network such as wireless LANs, CDMA, Bluetooth, and satellite communication, but the scope of the disclosure is not limited thereto. For convenience of explanation, a surveillance camera is presented herein as an example of the image capturing device 100. However, the disclosure is not limited thereto.

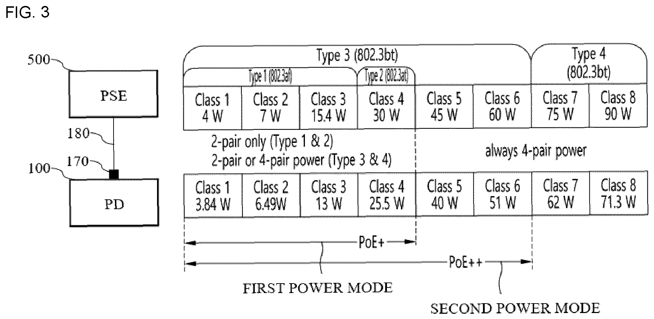

In the disclosure, a surveillance camera may also be an example of a powered device (PD), that operates based on Power-over-Ethernet (PoE), as will be described later in reference to FIG. 3. The powered device (PD) may receive power from a power sourcing equipment (PSE) through an Ethernet cable using a PoE method.

The power sourcing equipment (PSE) refers to a device that supplies power over an Ethernet cable. Representative examples include network switches with built-in PoE functionality (e.g., PoE switches), PoE injectors, PoE hubs, and industrial gateway devices. These devices may support various power levels in accordance with IEEE 802.3 standards (e.g., 802.3af/at/bt).

The powered device (PD) refers to a device that receives power from a PSE via an Ethernet cable. In the disclosure, a surveillance camera may correspond to the powered device (PD), and may operate according to procedures defined in the IEEE 802.3 standard, including detection, classification, power-on, and power maintenance.

The PoE mode refers to a power supply scheme set according to a power level required by the powered device (PD) during operation. Based on the IEEE 802.3 standard, the PoE mode may be classified into a first mode (PoE+) in accordance with IEEE 802.3at, and a second mode (PoE++) in accordance with IEEE 802.3bt. In the disclosure, the PoE mode may be referred to as a power mode, the first mode (PoE+) may be referred to a first power mode, and the second mode (PoE++) may be referred to as a second power mode.

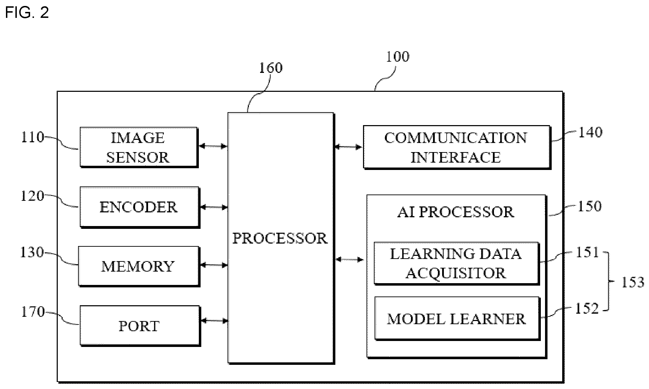

FIG. 2 is a block diagram illustrating a powered device (PD) according to an embodiment of the disclosure. Hereinafter, for convenience of explanation, the powered device (PD) will be described using a surveillance camera as an example.

FIG. 2 is a block diagram illustrating a configuration of a surveillance camera according to an embodiment of the disclosure. Referring to FIG. 2, a surveillance camera 100 shown therein may be a network camera that performs intelligent image analysis functions and may generate a signal based on the image analysis, but the operation of the surveillance camera is not limited thereto. The surveillance camera 100 shown in FIG. 2 may be an example of the image capture device 100 shown in FIG. 1.

The surveillance camera 100 may include an image sensor 110, an encoder 120, a memory 130, a communication interface 140, an artificial intelligence (AI) processor 150, and a processor 160.

The image sensor 110 may perform a function of acquiring (or obtaining) an image by photographing a surveillance region, and may be implemented, for example, using a Charge-Coupled Device (CCD) sensor, a Complementary Metal-Oxide-Semiconductor (CMOS) sensor, or the like.

The encoder 120 may perform encoding of the image acquired (or obtained) through the image sensor 110 into a digital signal, based on, for example, H.264, H.265, Moving Picture Experts Group (MPEG), Motion Joint Photographic Experts Group (M-JPEG) standards or the like.

The memory 130 may store image data, audio data, still images, metadata, or the like. As mentioned above, the metadata may be text-based data including object detection information (e.g., movement, audio, intrusion into a designated area, etc.) and object identification information (e.g., person, car, face, hat, clothes, etc.) photographed in the surveillance region, as well as a detected location information (e.g., coordinates, size, etc.).

For example, a still image may be generated together with the text-based metadata and stored in the memory 130, and may be generated by capturing image information for a specific analysis region among the image analysis information. For example, the still image may be implemented as a JPEG image file.

For example, the still image may be generated by cropping a specific region of the image data determined to be an identifiable object among the image data of the surveillance area detected for a specific region and a specific period, and may be transmitted in real time together with the text-based metadata.

The communication interface 140 may transmit the image data, audio data, still image, and/or metadata to the external device 300 (e.g., image receiving/searching device) shown in FIG. 1. The communication interface 140 according to an embodiment may transmit image data, audio data, still images, and/or metadata to the external device 300 of FIG. 1 (e.g., image receiving device) in real time. The communication interface 140 may perform at least one communication function among wired and wireless LAN (Local Area Network), Wi-Fi, ZigBee, Bluetooth, and Near Field Communication (NFC).

The Al processor 150 may be designed for an artificial intelligence (AI) image processing and applies a deep learning-based object detection algorithm which is learned in the image acquired (or obtained) through the surveillance camera system 10 according to an embodiment of the disclosure. The Al processor 150 may be implemented as an integral module with the processor 160 that controls the overall system or an independent module.

The Al processor 150 may include a learning data acquisitor 151 and a model learner 152.

The Al processor 150 may be mounted in an electronic device or a server that includes an Al module capable of performing Al processing, or may be implemented as an independent device. The Al processing may include all operations related to control units of the surveillance camera 100 or the image management server 200 shown in FIG. 1. For example, the surveillance camera 100 or the image management server 200 may perform Al processing on acquired video signals to execute operations such as processing, determination, and generation of control signals.

The Al processor 150 may be a client device that directly uses the Al processing result or a device in a cloud environment that provides the Al processing result to other devices. The Al processor 150 may be a computing device capable of learning (or training) a neural network, and may be implemented in various electronic devices such as a server, a desktop personal computer (PC), a notebook PC, and a tablet PC.

The Al processor 150 may be capable of training a neural network to recognize data related to the surveillance camera 100. For example, the neural network for recognizing data related to image capture device 100 may be designed to simulate the brain structure of a human on a computer and may include a plurality of network nodes having weights and simulating the neurons of a human neural network. The plurality of network nodes may transmit and receive data in accordance with each connection relationship to simulate the synaptic activity of neurons in which neurons transmit and receive signals through synapses. For example, the neural network may include a deep learning model developed from a neural network model. In the deep learning model, a plurality of network nodes may be positioned in different layers and may transmit and receive data in accordance with a convolution connection relationship. For example, the neural network may include various deep learning techniques such as deep neural networks (DNN), convolutional deep neural networks (CNN), recurrent neural networks (RNN), restricted Boltzmann machines (RBM), deep belief networks (DBN), and deep Q-networks, and may be applied to fields such as computer vision, voice recognition, natural language processing, and voice/signal processing.

For example, a processor that performs the functions described above may be a general purpose processor, such as a central processing unit (CPU), but may be an AI-dedicated processor, such as a graphics processing unit (GPU), for artificial intelligence learning.

The memory 130 may store various programs and data for the operation of the Al processor 150. The memory 130 may be a non-volatile memory, a volatile memory, a flash-memory, a hard disk drive (HDD), a solid state drive (SSD), or the like. The memory 130 may be accessed by the Al processor 150 to perform reading-out, recording, correcting, deleting, updating, etc. of data by the Al processor 150. Further, the memory 130 may store a neural network model (e.g., a deep learning model) generated through a learning algorithm for data classification/recognition according to an embodiment of the disclosure.

For example, the Al processor 150 may include a data learner 153 that learns a neural network for data classification/recognition. The data learner 153 may learn references information regarding what learning data are used and how to classify and recognize data using the learning data in order to determine data classification/recognition. The data learner 153 may learn a deep learning model by acquiring (or obtaining) learning data to be used for learning and by applying the acquired learning data to the deep learning model. The data learner 153 may be manufactured in the type of at least one hardware chip and mounted on the surveillance camera 100. For example, the data learner 153 may be manufactured in a hardware chip dedicated to artificial intelligence, and may be manufactured as a part of a general purpose processor (CPU) or a graphics processing unit (GPU) and mounted on the surveillance camera 100. Further, the data learner 153 may be implemented as a software module. In a case where the data learner 153 is implemented as a software module (or a program module including instructions), the software module may be stored in a non-transitory computer readable medium that is read by a computer. For example, at least one software module may be provided by an operating system (OS) or may be provided by an application.

The data learner 153 may include the learning data acquisitor 151 and the model learner 152.

The model learning module, e.g., the model learner 152, may perform learning such that a neural network model has a determination reference for how to classify selected data, using the acquired learning data. For example, the model learner 152 may learn or train a neural network model through supervised learning that uses at least some of learning data as a determination reference. Alternatively or additionally, the model learner 152 may learn or train a neural network model through unsupervised learning that finds out a determination reference by performing learning by itself using learning data without supervision. Further, the model learner 152 may learn or train a neural network model through reinforcement learning using feedback about whether the result of situation determination according to learning is correct. Further, the model learner 152 may learn or train a neural network model using a learning algorithm including error back-propagation or gradient descent.

In a case where the neural network model is trained or learned, the model learner 152 may store the trained neural network model in a memory. The model learner 152 may store the trained neural network model in the memory of the server connected to the surveillance camera 100 through a wired or wireless network.

The data learner 153 may further include a learning data pre-processor and a learning data selector to improve the analysis result of a recognition model or to reduce resources or time required for generating a recognition model.

The learning data pre-processor may preprocess acquired data such that the acquired data may be used for learning in situation determination. For example, the learning data pre-processor may process or convert acquired data into a selected format such that the model learner 152 may use learning data acquired (or obtained) for image recognition training.

Further, the learning data selector may select data for learning from the learning data acquired (or obtained) by the learning data acquisitor or the learning data pre-processed by the pre-processor. The selected learning data may be provided to the model learner 152. For example, the learning data selector may select only data for objects included in a specific area as learning data by detecting the specific area in an image acquired (or obtained) through a camera of a vehicle.

Further, the data learner 153 may further include a model estimator to improve the analysis result of a neural network model.

The model estimator may input estimation data to a neural network model, and in a case where an analysis result output from the estimation data does not satisfy a selected reference, it may cause the model learner 152 perform learning again. For example, the estimation data may be data predefined in advance for estimating a recognition model. For example, in a case where the number or ratio of estimation data with an incorrect analysis result from a recognition model learned with respect to estimation data exceeds a selected threshold, the model estimator may estimate that a selected reference is not satisfied.

The processor 160 may control the overall operation of the surveillance camera 100. The processor 160 may control the operation of the surveillance camera 100 by processing signals, data, and/or information input and/or output through the above-described components, and/or by executing application programs stored in the memory 130. To execute the application programs, the processor 160 may operate at least two or more components among those included in the surveillance camera 100 in combination.

In the disclosure, the surveillance camera 100 according to an embodiment includes a port 170 configured to accommodate an Ethernet cable 180, through which the PoE is supplied. The processor 160 may be responsible for communication with a power sourcing equipment (PSE) 500 that supplies power, and for exchanging signature and classification information in accordance with the standard, so that the PSE 500 may supply a selected amount of power through the Ethernet cable 180. According to an embodiment, the surveillance camera 100 may have a power consumption that exceeds the amount of power available via the PoE. For example, the power required for ensuring the IR visibility range, operating a motor for selected rotation as a pan-tilt-zoom (PTZ) camera, or driving a fan may exceed the maximum power supply capacity of the PSE 500 to the surveillance camera 100.

Accordingly, in the disclosure, there is a need to control the power mode of the surveillance camera 100 in advance such that the initially set power mode does not exceed the maximum power supply capacity available from the PSE 500.

In the disclosure, at least one of a surveillance camera, an autonomous vehicle, a user terminal, and a server may be linked to an Al module, a robot, an augmented reality (AR) device, a virtual reality (VR) device, a device related to a 5G service, or the like.

FIG. 3 is a schematic diagram illustrating a PoE power mode of a powered device according to an embodiment of the disclosure.

In the disclosure, a surveillance camera according to an embodiment may be a Power-over-Ethernet (PoE) powered device (PD) 100 that receives power from a power sourcing equipment (PSE) 500.

To regulate the amount of power delivered to powered devices such as the powered device (PD) 100, which may be a surveillance camera, the Institute of Electrical and Electronics Engineers (IEEE) has defined various PoE standards. These standards include IEEE 802.3af, IEEE 802.3at, and IEEE 802.3bt. IEEE 802.3af, introduced in 2003 as the first PoE standard, may provide 12.95 W to 15.4 W of power per port. As the demand for higher-powered devices increased, IEEE 802.3at, established in 2009, was introduced as the second standard and enables power delivery of 25 W to 30 W per port. In 2018, IEEE 802.3bt was developed to support even greater power delivery, specifying 51 W to 100 W per port. Type 3 of IEEE 802.3bt allows for the delivery of up to 60 W per port and guarantees at least 51 W per port. Type 4 allows for up to 100 W per port and guarantees at least 71 W per port.

In an embodiment of the disclosure, the powered device (PD) 100 is configured to operate in one of two power modes: a first mode corresponding to a first power range deliverable via PoE, and a second mode corresponding to a second power range greater than the first power range. These first and second modes are illustrative, and it is understood that the number of selectable power modes may be extended to more than two as additional PoE standards are developed.

The first mode and the second mode may be selected by the user of the powered device (PD) 100. The power range provided under each of the first and second modes may differ depending on the communication between the powered device (PD) 100 and the PSE 500 through the port 170 (FIG. 2) and the Ethernet cable 180, in accordance with the applicable PoE standard.

According to an embodiment, PoE+ may guarantee up to 30 W on the PSE side and allow for 25.5 W of usable power on the powered device (PD) side. PoE++ Type 3 may guarantee up to 60 W on the PSE side and allow for 51 W on the powered device (PD) side, and PoE++ Type 4 may guarantee close to 100 W on the PSE side and allow for 71.3 W on the powered device (PD) side. Accordingly, in an embodiment of the disclosure, the first mode may refer to the PoE+ mode, and the second mode may refer to the PoE++ mode. The second mode may correspond to either Type 3 or Type 4. For example, the standard corresponding to the first mode may be IEEE 802.3at, and the standard corresponding to the second mode may be IEEE 802.3bt.

For example, in a case where the powered device (PD) 100 is set to the first mode, it may operate normally as long as the PSE 500 supports either PoE+ or PoE++, since the power requirements of the powered device (PD)100 may be sufficiently met or covered.

However, in a case where the powered device (PD) 100 is set to the second mode and the connected PSE 500 supports only PoE+, problems may occur in a case where the powered device (PD) 100 attempts to perform functions that require power exceeding the maximum allowable power under the PoE+ standard, such as forced shutdown or failure in power delivery by the PSE switch.

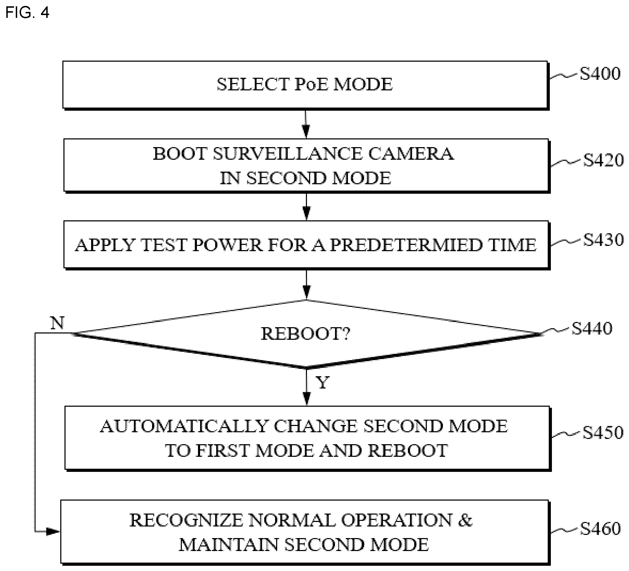

FIG. 4, in reference to FIGS. 2 and 3, is a flowchart illustrating a method for controlling a power mode of a powered device according to an embodiment of the disclosure. The power mode control method for the powered device may be implemented by the processor 160 shown in FIG. 2. Hereinafter, the powered device will be described by taking a surveillance camera as an example.

Referring to FIG. 4, the processor 160 (FIG. 2) may select a PoE mode of the surveillance camera (S400). The PoE mode may be selected via user input. As described above, the PoE mode may include a first mode (PoE+ mode), in which a maximum power of 25.5 W is provided to the port (e.g., the port 170 shown in FIG. 3) of the surveillance camera, and a second mode (PoE++ mode), in which a maximum power of 51 W or 71.3 W is provided. The power mode may further include one or more additional modes according to PoE standards that may be newly developed in the future to support power over 71 W.

In another example, the PoE mode may be automatically selected by detecting the power specification of a PSE (e.g., the PSE 500 shown in FIG. 3) connected through the port.

In a case where the user selects the second mode, the processor 160 initiates booting of the surveillance camera (S420). Upon booting, although the surveillance camera requests power corresponding to PoE++, the processor 160 may supply test power for a selected period to determine whether the PSE 500 can supply sufficient power required by the surveillance camera (S430).

The test power may be a power value greater than the maximum allowed by PoE+ but less than that of PoE++. In an embodiment, in a case where the surveillance camera is in the second mode (PoE++, Type 3), the test power may be 37 W, which is greater than 25.5 W and less than 51 W. In a case where the PSE 500 supports only the first mode (e.g., provides up to 30 W), the PSE may shut down and the surveillance camera may reboot. On the other hand, in a case where the PSE 500 supports the second mode (Type 3, up to 60 W), the surveillance camera may continue operating normally after the test power phase.

In an embodiment, the test power may be applied for a selected time (e.g., 5 seconds) at the beginning of the "camera on" stage (or step) after going through the "power on" and "fan on" stages (or steps) during booting. While the "power on" and "fan on" stages (or steps) may be supported under PoE+ power, the "camera on" stage (or step) may require higher power due to PTZ motor rotation. Therefore, it is preferable to apply the test power starting at the "camera on" stage (or step).

The processor 160 may determine whether the surveillance camera reboots in response to the test power in a case where the surveillance camera is set to the second mode (S440). In a case where a reboot occurs (S440: Y), the processor 160 may determine that the connected PSE conforms to the first mode (PoE+). Since the PSE in the first mode cannot provide power exceeding the PoE+ range, a reboot (or shutdown) occurs in the test power phase.

However, in a case where the PSE conforms to the first mode (PoE+), the surveillance camera may be configured to support both first and second modes. Accordingly, the processor 160 may automatically switch the PoE mode from the second mode (PoE++) to the first mode (PoE+) in the reboot process (S450). After rebooting, the surveillance camera may operate normally without shutdown. In a case where the PoE mode is not switched from the second mode to the first mode in rebooting, the surveillance camera may enter a loop of continuous rebooting due to repeated power insufficiency during the test power phase.

In a case where the processor 160 determines that there is no reboot during the test power phase (S440: N), it is assumed that the PSE sufficiently supports the power required in the second mode. Therefore, the PoE mode of the surveillance camera 100 may be maintained in the second mode.

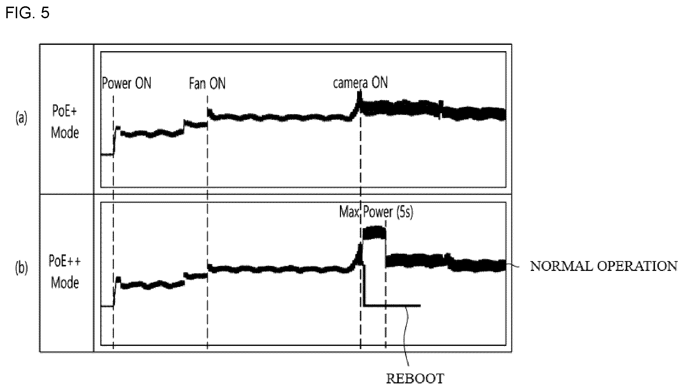

FIG. 5 illustrates an example in which a power mode change of a powered device (PD) is required according to an embodiment of the disclosure. Assuming that a power sourcing equipment (PSE) (e.g., the PSE 500 of FIG. 3) supports at least a PoE+ mode, portion (a) of FIG. 5 shows a case where the surveillance camera operates in the PoE+ mode, and portion (b) of FIG. 5 shows a case where the surveillance camera operates in the PoE++ mode. For example, in a case where both the PSE and the surveillance camera operate in the PoE+ mode, the surveillance camera may perform normal operations in all stages (or all steps) following (or after) booting, including the power on, fan on, and camera on stages (or steps). However, in the case where the surveillance camera is set to the second mode (PoE++), the processor 160 of the surveillance camera may determine whether to change the PoE mode by applying test power (e.g.., max power) for a selected period (e.g., 5 seconds) after booting.

For example, according to another embodiment of the disclosure, the surveillance camera may adaptively control its power mode according to the power specification of the PSE, regardless of the test power application phase after booting.

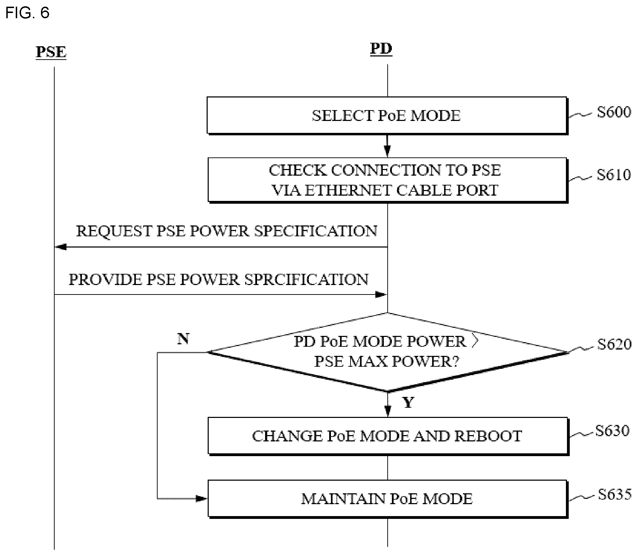

FIG. 6 is a flowchart illustrating a method for controlling a power mode of a powered device (PD) according to another embodiment of the disclosure.

Referring to FIG. 6, the powered device (PD) (e.g., the powered device (PD) of FIG. 3) may check whether it is connected to a PSE (e.g., the PSE 500 of FIG. 3) via a port (e.g., the port 170 of FIG. 3 or an Ethernet cable port) in a state where a PoE mode is selected (S600, S610). In the process, the powered device (PD) may transmit a request signal for the power specification of the PSE, and in response to the request, the PSE may transmit information on its power specification to the powered device (PD). In a case where the power requirement of the currently selected PoE mode is determined to exceed the maximum power supported by the PSE (i.e., the maximum amount of power the PSE may provide), the powered device (PD) may determine that a change of the PoE mode is necessary and switches its PoE mode. For example, the powered device (PD) may switch from the PoE++ mode to the PoE+ mode and perform a reboot process (S630).

On the other hand, in a case where the power requirement of the selected PoE mode is less than the maximum power available from the PSE, the powered device (PD) may maintain the current PoE mode and proceeds with normal operation.

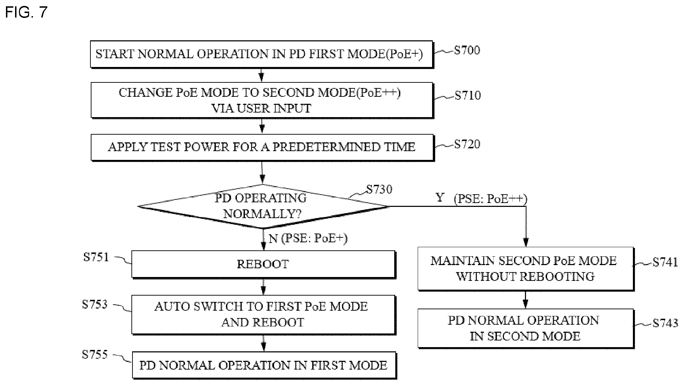

FIG. 7 is a flowchart illustrating a method for controlling a power mode of a powered device (PD) according to another embodiment of the disclosure.

FIG. 7 illustrates a power mode control process in a case where the powered device (PD) (e.g., the powered device (PD) 100 of FIG. 3) is initially operating in a first mode (PoE+) and is switched to a second mode (PoE++) based on a user input.

The powered device (PD) may operate normally in the first mode (PoE+) (S700). The term "normal operation" means that the powered device (PD) has completed booting and its functions, such as image capture, encoding, storage, and transmission are active, with stable power being supplied from a PSE (e.g., the PSE 500 of FIG. 3) at a PoE+ level (e.g., up to 25.5W). For example, the powered device (PD) may perform its intended functions, such as streaming, event detection, and user command processing, in the first mode.

The powered device (PD) may change its PoE mode to the second mode (PoE++) based on a user input (S710).

The user input may be received through various interfaces, such as a web UI, mobile application, client software, or external control server. For example, the user may select "Switch to High Power Mode (PoE++)" from a camera setting menu, and the internal processor of the powered device (PD) may receive and process the command by setting a flag or triggering a system restart.

After the power mode is changed, the powered device (PD) may supply a test power for a selected period (S720).

The test power may be set between the PoE+ level (e.g., 25.5 W) and the PoE++ level (e.g., below 45 W) and may be regulated internally by the powered device (PD).

The powered device (PD) may determine whether it receives a normal response to the test power (S730).

The powered device (PD) may use a power detection circuit or communication module to determine whether the PSE is properly responding to the test power. For instance, link layer discovery protocol (LLDP) or current-sensing circuits may be used to determine whether the PSE may supply sufficient power. In a case where the power supply is stable without overload, the response may be determined to be normal.

In a case where a normal response is detected, the powered device (PD) may maintain the second mode (PoE++) without rebooting (S741) and continues operation in the second mode (S743).

Since the test power was validated during the power mode transition, the system may continue booting in the second mode without an additional reboot. Normal operation in the second mode may include power-demanding operations, such as Al processing, sensor operation, high-resolution image processing, and network transmission.

In a case where no normal response is detected to the test power (S730:N), the powered device (PD) may perform a reboot (S751).

In a case where the PSE cannot supply sufficient power or in a case where the powered device (PD) detects an overcurrent state, the system may enter a protection mode via reboot. During the reboot, the previously selected second mode may be automatically switched back to the first mode.

The powered device (PD) may automatically switch the PoE mode to the first mode (PoE+) and may perform rebooting (S753), then resumes normal operation in the first mode (S755).

The internal configuration may be reset, or a protection algorithm may restore the power mode. The powered device (PD) then boots in a restricted power environment consistent with PoE+, disabling the high-power mode and resuming stable operation. The fallback may be notified to the user via a UI or system logs.

According to the embodiment, the powered device (PD) may switch its power mode even during operation based on a user request, and verify PSE capabilities through test power to adaptively recover a suitable mode. This prevents infinite rebooting or instability caused by mismatches between the user intent and the actual power environment.

The disclosure may be embodied as computer-readable code on a medium having a program recorded thereon. The computer-readable recording medium may be all types of recording devices that store data which are read by a computer system. Examples of the computer-readable medium may include a hard disk drive (HDD), a solid state drive (SSD), a silicon disk drive (SDD), a read-only memory (ROM), a random access memory (RAM), a compact disc read-only memory (CD-ROM), a magnetic tape, a floppy disk, and an optical data storage device. Therefore, the detailed description should not be construed as restrictive in all respects and should be considered as illustrative. The scope of the disclosure should be determined by reasonable interpretation of the appended claims, and all changes within the equivalent scope of this specification are included in the scope of this specification.

At least one of the components, elements, modules or units (collectively "components" in this paragraph) represented by a block or an equivalent indication in the drawings including FIG. 2 may be implemented or embodied by analog and/or digital circuits including one or more of a logic gate, an integrated circuit, a microprocessor, a microcontroller, a memory circuit, a passive electronic component, an active electronic component, an optical component, and the like. Alternatively or additionally, these components may be implemented or embodied by software including one or more instructions stored in a storage medium that is readable by at least one processor. For example, the at least one processor may invoke at least one of the one or more instructions stored in the storage medium, and execute it, with or without using one or more other components under the control of the at least one processor. This allows the at least one processor to perform at least one function or operation described above as being performed by each of the components according to the at least one instruction invoked. Here, the at least one processor may include a central processing unit (CPU), a graphic processing unit (GPU), another type of microprocessor, not being limited thereto.

## Claims

1. A powered device (100) comprising:
a port (170) configured to be connected to an Ethernet cable (180) through which Power over Ethernet, PoE, is supplied; and
a processor (160) configured to control a power mode comprising a first power mode and a second power mode such that the powered device (100) operates in one of the first power mode having a first power range supplied via the PoE, and the second power mode having a second power range supplied via the PoE which is greater than the first power range,
wherein the processor (160) is further configured to, based on the powered device (100) being booted in the second power mode and being rebooted in response to a test power being supplied during a selected period of time, switch the power mode to the first power mode and reboot the powered device (100).

2. The powered device (100) of claim 1, wherein the processor (160) is further configured to:
communicate with a power sourcing equipment, PSE, (500) through the port (170) and the Ethernet cable (180), and
switch the power mode to the first power mode and reboot the powered device (100) based on a power range supplied via the PoE in accordance with a PoE standard which is insufficient to support the second power range.

3. The powered device (100) as in claim 2, wherein the processor (160) is further configured to maintain the second power mode based on a power supplied from the PSE (500) which is greater than the test power.

4. The powered device (100) as in any one of claims 1 to 3, wherein the power mode is a PoE mode, the first power mode is a first PoE mode corresponding to IEEE 802.3at, and the second power mode is a second PoE mode corresponding to IEEE 802.3bt.

5. The powered device (100) as in any one of claims 1 to 4, wherein the processor (160) is configured to switch the power mode to the first power mode and reboot the powered device (100) based on a power specification of a power sourcing equipment, PSE, (500) provided through the port (170) and the Ethernet cable (180) being below the second power range.

6. The powered device (100) as in any one of claims 1 to 5, wherein the powered device (100) comprises a surveillance camera.

7. The powered device (100) of claim 6, wherein the processor (160) is configured to supply the test power in a stage in which the surveillance camera performs a power-on operation, a fan-on operation, and a camera-on operation after booting of the surveillance camera.

8. The powered device (100) as in any one of claims 1 to 7, wherein the processor (160) is configured to generate an alarm to be displayed on a display of an external device
(300) configured to manage the powered device (100), and/or to store a system log, based on the power mode being switched to the first power mode and the powered device (100) being rebooted.

9. The powered device (100) as in any one of claims 1 to 8,
wherein the processor (160) is configured to transmit a signal requesting the power specification of the PSE (500), and receive information related to the power specification from the PSE (500), and
control the power mode such that a power specification of the PSE (500) is greater than a power range required by the selected power mode.

10. The powered device (100) as in any one of claims 1 to 9, wherein the test power being supplied during the selected period of time is greater than the first power mode and lower than the second power mode.

11. The powered device (100) as in any one of claims 1 to 10, wherein the processor (160) is configured to determine that the powered device (100) does not reboot in response to the supplied test power phase and to maintain the second power mode in this case.

12. A method for controlling a power mode of a powered device (100), the method comprising:
booting (S420) the powered device (100) in a selected power mode among at least two power modes having different power ranges;
applying (S430) a test power during a selected period of time after the booting of the powered device (100);
detecting (S440) whether the powered device (100) reboots in response to the supplied test power; and
switching (S450) the power mode to have a smaller power range than the selected power mode based on the powered device (100) being determined to reboot.

13. The method of claim 12, wherein the power mode comprises a first power mode based on IEEE 802.3at and a second power mode based on IEEE 802.3bt, according to a power specification provided to an Ethernet cable port (170) of the powered device (100).

14. The method of claims 12 or 13, further comprising:
after the powered device (100) starts a normal operation in the first power mode, changing the power mode to the second power mode through user input;
applying a test power; and
maintaining the second power mode without rebooting the powered device (100) based on the powered device (100) responding normally to the applied test power.

15. The method as in any one of claims 12 to 14, wherein the selected power mode is selected through user input before the test power is applied.
